# DEMANDE DE BREVET EUROPEEN

(11) **EP 4 625 873 A1**
(43) Date de publication de la demande: **01.10.2025**
(21) Numéro de dépôt: 25164119.7
(22) Date de dépôt: 17.03.2025
(51) Int. Cl.: H04L 9/00, H04L 9/32

(54) **SYSTÈME ET PROCÉDÉ D AUTHENTIFICATION D'UN PRODUIT**

(30) Priorité: 29.03.2024 FR 2403320
(71) Demandeur: STMicroelectronics International N.V., 1228 Plan-les-Ouates, Geneva (CH)
(72) Inventeur: MAURICE, Sophie, 38330 BIVIERS (FR); PARDO, Romain, 13111 COUDOUX (FR); TERRIER, Julien, 83640 SAINT ZACHARIE (FR)
(74) Mandataire: Cabinet Beaumont

(57) **Abrégé**

La présente description concerne un procédé d'enregistrement d'une liaison entre une étiquette radiofréquences (110) et un jeton comprenant des données associées à un produit, le procédé comprenant :
- l'envoi, par communication en champ proche ou en radioidentification, de données d'une transaction par un dispositif électronique (130) à l'étiquette ;
- la génération d'une signature par l'étiquette sur la base d'une clé privée (C_PR) d'une paire de clés asymétriques comprenant en outre une clé publique (C_PU), la signature étant configurée pour permettre un enregistrement sur une chaîne de blocs ;
- la transmission par l'étiquette de la transaction signée vers le dispositif électronique en NFC ou RFID ; et
- l'enregistrement, de manière immuable, de la liaison entre l'étiquette et le jeton par la transmission, par le dispositif électronique, de la transaction signée à un serveur (150) réalisant la chaîne de blocs.

## Description

### Domaine technique

La présente description concerne de façon générale un système et un procédé d'authentification d'un produit et en particulier des solutions basées sur des chaînes de blocs.

### Technique antérieure

Pour certains produits, il peut être souhaitable de prévoir un système d'authentification permettant de contrôler l'origine et la traçabilité de ces produits. Pour répondre à ce besoin, il a été proposé de coller un QR code sur un produit, permettant d'authentifier le produit à l'aide d'un lecteur. Toutefois, un inconvénient avec cette solution est qu'un QR code est susceptible d'être abîmé et donc devenir illisible pendant la vie du produit. Une autre solution proposée est d'intégrer un circuit électronique au produit. Le circuit électronique est capable de communiquer avec un dispositif électronique externe par des moyens de communication sans fil, par exemple wifi ou Bluetooth, afin de lire des informations stockées par le circuit électronique et d'authentifier le produit sur la base de ces informations.

Cependant, les solutions existantes sont en général complexes, coûteuses, pas suffisamment sécurisées et/ou requièrent une batterie, et il existe donc un besoin pour une solution d'authentification améliorée.

### Résumé de l'invention

Un mode de réalisation prévoit un procédé d'enregistrement d'une liaison entre une étiquette radiofréquences et un jeton comprenant des données associées à un produit, le procédé comprenant :
- l'envoi, par communication en champ proche (NFC, de anglais « Near Field Communication ») ou en radio-identification (RFID, de l'anglais « radio frequency identification »), de données d'une transaction par un dispositif électronique à l'étiquette ;
- la génération d'une signature des données de la transaction par l'étiquette sur la base d'une clé privée d'une paire de clés asymétriques comprenant en outre une clé publique, la signature étant configurée pour permettre un enregistrement sur une chaîne de blocs ;
- la transmission par l'étiquette de la transaction signée vers le dispositif électronique en NFC ou RFID ; et
- l'enregistrement, de manière immuable, de la liaison entre l'étiquette et le jeton par la transmission, par le dispositif électronique, de la transaction signée à un serveur réalisant la chaîne de blocs.

Selon un mode de réalisation, la signature comprend trois composantes générées par un algorithme de signature cryptographique, dont la troisième composante permet l'identification de la clé publique.

Selon un mode de réalisation, la signature comprend deux composantes générées par un algorithme de signature cryptographique, l'une des composantes identifiant la paire de clés asymétriques.

Selon un mode de réalisation, l'enregistrement de la liaison entre l'étiquette et le jeton comprend l'exécution par le serveur de scripts.

Selon un mode de réalisation, l'envoi des données de transaction par le dispositif électronique s'effectue par l'intermédiaire d'une application, l'application étant mise en œuvre par le dispositif électronique et l'enregistrement de la liaison étant initié par l'application.

Selon un mode de réalisation, la génération de la signature est effectuée par un algorithme de cryptographie elliptique.

Selon un mode de réalisation, la chaîne de blocs est de type machine virtuelle Ethereum.

Un autre mode de réalisation prévoit un système d'enregistrement d'une liaison entre une étiquette radiofréquences et un jeton comprenant des données associées à un produit, le dispositif comprenant :
- un dispositif électronique configuré pour envoyer, en NFC ou en RFID, des données d'une transaction à l'étiquette, et configuré pour transmettre la transaction signée à un serveur réalisant une chaîne de blocs ;
- l'étiquette configurée pour générer une signature des données de la transaction sur la base d'une clé privée, formant une paire de clés asymétriques comprenant en outre une clé publique, la signature étant configurée pour permettre un enregistrement sur une chaîne de blocs, l'étiquette étant en outre configurée pour transmettre, en NFC ou en RFID, la signature vers le dispositif électronique, le dispositif électronique étant configuré pour transmettre la transaction signée vers le serveur réalisant la chaîne de blocs et configuré pour enregistrer, de manière immuable, la liaison entre l'étiquette et le jeton.

Selon un mode de réalisation, la signature comprend trois composantes générées par un algorithme de signature cryptographique, dont la troisième composante permet l'identification de la clé publique.

Selon un mode de réalisation, la signature comprend deux composantes générées par un algorithme de signature cryptographique, l'une des composantes identifiant la paire de clés asymétriques.

Selon un mode de réalisation, le procédé comprend en outre le serveur.

Selon un mode de réalisation, l'étiquette est attachée ou intégrée au produit.

Selon un mode de réalisation, les données associées au produit sont des images et/ou des métadonnées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, sous forme de blocs, un système d'authentification selon un mode de réalisation de la présente description ;
la figure 2 représente, sous forme de blocs et de façon plus détaillée, l'étiquette 110 et le dispositif électronique 130 de la figure 1 en communication avec un serveur 150, selon un mode de réalisation de la présente description;
la figure 3 représente des étapes d'un exemple de procédé d'enregistrement d'une liaison entre une étiquette de communication en champ proche (NFC, de l'anglais « Near Field Communications ») et un jeton selon un mode de réalisation de la présente description ;
la figure 4 représente des étapes d'un autre exemple de procédé d'enregistrement d'une liaison entre une étiquette et un jeton selon un mode de réalisation de la présente description;
la figure 5 représente des étapes d'un exemple de procédé d'enregistrement d'un propriétaire d'un produit selon un mode de réalisation de la présente description ;
la figure 6 représente des étapes d'un exemple de procédé de vérification d'authenticité d'un produit selon un mode de réalisation de la présente description ; et
la figure 7 représente des étapes d'un exemple de procédé de vérification d'appartenance d'un produit selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, une chaîne de blocs et son fonctionnement ainsi que des protocoles de communication en champ proche sont connus de la personne du métier et ne seront pas détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

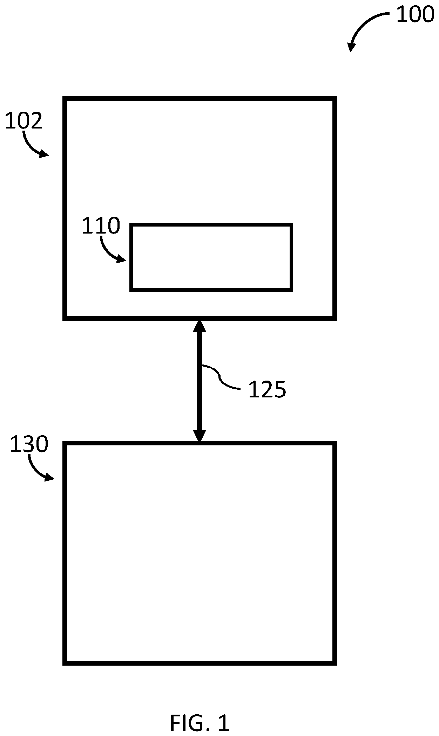

La figure 1 représente, sous forme de blocs, un système d'authentification 100 selon un mode de réalisation de la présente description.

Le système d'authentification 100 comprend une étiquette radiofréquences 110 présente sur un produit 102. Par exemple, le produit 102 est un objet matériel, par exemple un objet ne comprenant pas de circuit électronique. Le produit 102 est par exemple un habit, un accessoire, un produit de consommation, par exemple une bouteille d'alcool, un certificat de propriété, etc.

L'étiquette 110 est par exemple collée ou intégrée physiquement au produit 102 lors de sa fabrication et ne peut par exemple pas être retirée ou modifiée. Par exemple, la liaison physique est réalisée par l'intermédiaire d'une colle de sorte que l'étiquette 110 soit détruite ou endommagée si elle était retirée du produit 102.

Le système d'authentification 100 comprend également un dispositif électronique 130. L'étiquette 110 est configurée pour communiquer par une liaison de communication en fréquences radio, par exemple selon un protocole de communication en champ proche (NFC, de l'anglais « Near Field Communication ») ou en radio-identification (RFID, de l'anglais « radio frequency identification ») 125, avec le dispositif électronique 130. Le dispositif électronique 130 est par exemple un lecteur NFC ou RFID à hautes fréquences, un ordinateur, un téléphone mobile, une tablette électronique, etc., équipés d'un lecteur NFC ou RFID à hautes fréquences. Le dispositif électronique 130 est par exemple configuré pour mettre en œuvre une interface avec un utilisateur, par exemple décentralisée, par exemple une application mobile. Le dispositif électronique 130 est également configuré pour communiquer avec un serveur distant (non représenté en figure 1) afin de mettre en œuvre un procédé d'authentification du produit 102 sur la base de l'étiquette 110.

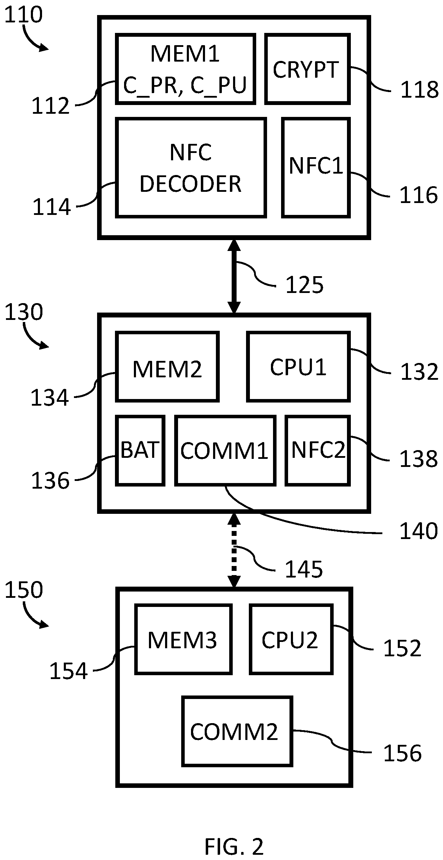

La figure 2 représente, sous forme de blocs et de façon plus détaillée, l'étiquette 110 et le dispositif électronique 130 de la figure 1 en communication avec un serveur 150, selon un mode de réalisation de la présente description.

Le produit 102 de la figure 1 n'est pas représenté dans la figure 2 et seule l'étiquette 110 est illustrée. L'étiquette 110 comprend par exemple une mémoire 112 (« MEM1 »). Une ou plusieurs paires de clés comprenant chacune une clé privée C_PR et une clé publique C_PU sont par exemple générées par le fabriquant de l'étiquette 110 et sont par exemple attribuées à l'étiquette 110 et stockées dans la mémoire 112.

L'étiquette 110 comprend également un décodeur NFC 114 (« NFC DECODER ») et une interface NFC 116 (« NFC1 ») comprenant par exemple une antenne configurée pour envoyer et recevoir des ondes ayant une fréquence radio compatible avec une communication en NFC et comprenant par exemple également un circuit de conversion (non représentés). Le bloc 114 et l'interface NFC 116 sont configurés pour que l'étiquette 110 puisse communiquer par une liaison NFC 125 avec le dispositif électronique 130.

L'étiquette 110 comprend également un circuit cryptographique 118 (« CRYPT ») configuré pour réaliser des opérations cryptographiques, par exemple pour calculer une valeur de hachage à partir d'informations sur une transaction à effectuer et/ou générer des signatures à partir de la clé privée C_PR enregistrée dans la mémoire 112.

Le dispositif électronique 130 comprend par exemple une unité de traitement centrale 132 (CPU1, de l'anglais « Central Processing Unit ») configurée pour mettre en œuvre l'application mobile, une mémoire 134 (« MEM2 ») et une batterie 136 (« BAT »). Le dispositif électronique 130 comprend également une interface NFC 138 (« NFC2 ») comprenant par exemple une antenne configurée pour recevoir et envoyer des ondes ayant une fréquence radio compatible avec une communication en NFC et comprenant par exemple un circuit de conversion (non représentés). Le dispositif électronique 130 comprend également une interface de communication 140 (« COMM1 ») comprenant par exemple une antenne configurée pour recevoir et envoyer des ondes ayant une fréquence compatible avec une communication sans fil, par exemple une connexion wifi ou une communication sur un réseau cellulaire. Le dispositif électronique 130 est configuré pour communiquer par une liaison NFC ou RFID 125 avec l'étiquette 110 et pour communiquer par une liaison sans fil 145 avec le serveur 150 par l'intermédiaire de l'interface de communication 140 et par exemple d'un ou plusieurs réseaux intermédiaires sans fil ou filaires, tels que l'internet.

Le serveur 150 comprend par exemple une unité de traitement centrale 152 (« CPU2 »), une mémoire 154 (« MEM ») et une interface de communication 156 (« COMM2 ») configurée pour recevoir et transmettre des données au dispositif électronique 130. Le serveur 150 représente par exemple un noeud d'une chaine de blocs. Dans certains cas, la chaîne de blocs comprend plusieurs nœuds (non illustrés), chacun réalisé par un serveur similaire au serveur 150. Le dispositif électronique 130 communique par exemple avec une interface du serveur 150 qui consiste en un noeud réalisant des appels de procédure à distance (RPC, de l'anglais, « Remote Procedure Call ») vers le serveur 150.

L'étiquette 110, le dispositif électronique 130 et le serveur 150 comprennent par exemple d'autres éléments non illustrés dans la figure 2.

Des modes de réalisation prévoient de lier de manière immuable et irréversible l'étiquette 110 présente sur le produit 102 à un jeton numérique TOKEN (non illustré en figure 2), par exemple un jeton non fongible (NFT, de l'anglais « Non-Fungible Token ») et/ou un jeton lié (en anglais « SoulBound Token »).

Afin de lier le jeton TOKEN avec l'étiquette 110, un procédé est mis en œuvre comprenant, lors d'une première phase, la génération d'une signature SIG1, générée par l'étiquette 110, et, lors d'une deuxième phase, l'enregistrement de la liaison sur une chaîne de blocs sur la base de la signature SIG1.

Cette liaison permet d'améliorer la traçabilité du produit 102 de sa fabrication à une commercialisation ou à des commercialisations successives et de mieux informer des utilisateurs sur la chaîne d'approvisionnement du produit 102.

Selon un mode de réalisation, le jeton numérique TOKEN est générée par un système informatique appartenant à l'entité commercialisant le produit 102. Le jeton numérique TOKEN comprend par exemple des images et/ou des métadonnées du produit 102, par exemple une photo du produit 102, un nom, un logo de la marque du produit 102, le nom du créateur, une description, une date de création, etc.

Le serveur 150 correspond par exemple à un nœud de la chaîne de blocs. Le serveur 150 est par exemple configuré pour exécuter des scripts de commandes sur la chaîne de blocs et pour enregistrer des transactions sur la chaîne de blocs, dans la mémoire 154.

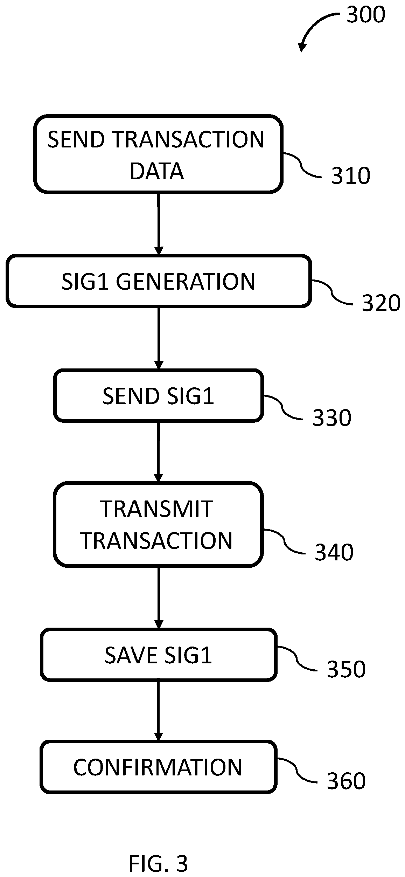

La figure 3 représente des étapes d'un exemple de procédé 300 d'enregistrement d'une liaison entre l'étiquette 110 de la figure 1 et le jeton TOKEN selon un mode de réalisation de la présente description.

Le procédé est par exemple initié par un utilisateur en possession du produit 102 de la figure 1 et du dispositif électronique 130. L'utilisateur utilise par exemple l'application mobile mise en œuvre par le dispositif électronique 130 pour initier le procédé d'enregistrement de la liaison entre l'étiquette 110 et le jeton TOKEN. Cette procédure est par exemple effectuée une seule fois, par exemple lors de la fabrication du produit 102 ou avant sa commercialisation.

Dans une étape 310 (« SEND TRANSACTION DATA »), le dispositif électronique 130 des figures 1 et 2 envoie, en NFC, une demande de signature à l'étiquette 110 qui la reçoit. L'envoi de la demande de signature est par exemple effectuée par l'intermédiaire de l'application mobile. La demande de signature est par exemple envoyée en compressé (en anglais, « hashed ») ou en sérialisé par un encodage du préfixe de longueur récursive (RLP, de l'anglais « Recursive Length Prefix »).

Selon un mode de réalisation, l'utilisateur, par l'intermédiaire du dispositif électronique 130, crée une structure de données de transaction comprenant par exemple neuf champs comprenant plusieurs ou l'ensemble des éléments suivants : un nonce, un prix du gas, une limite de gas, un destinataire, un montant, des données, un identifiant de la chaîne de blocs et deux champs initialisés chacun à la valeur zéro.

Le nonce est par exemple un numéro de séquence, généré par un compte détenu à l'extérieure de la chaîne de blocs (EOA, de l'anglais, « externally owned account ») et utilisé pour éviter une attaque par rejeu (en anglais, « replay attack ») .

Le prix du gas correspond par exemple à la quantité d'éther, en wei, que l'utilisateur est prêt à payer pour une unité de gas.

La limite de gas correspond par exemple à la quantité maximale de gas que l'utilisateur est prêt à payer pour la transaction.

Le destinataire correspond par exemple à une adresse de destination, par exemple une adresse d'un EOA ou une adresse d'un contrat numérique, tel qu'un contrat intelligent, (en anglais, « smart contract »), sur la chaîne de blocs.

Le montant correspond par exemple à la quantité d'éther, en wei, à envoyer au destinataire.

Les données sont par exemple des données binaires de longueur variables, par exemple un sélecteur de fonction, par exemple les 4 premiers bits de hachage d'un algorithme de hachage sécurisé, par exemple Keccak-256, et les variables de la fonction, par exemple en lien avec le contrat intelligent appelé.

L'identifiant de la chaîne de blocs est par exemple un identifiant unique associé à un réseau de chaînes de blocs comprenant la chaîne de blocs.

Les deux champs comprenant initialement un zéro, en complément de l'identifiant de la chaîne de blocs, sont par exemple utilisés pour sécuriser la transaction et prévenir d'attaques par rejeu.

Lors de l'étape 310, la demande de signature envoyée par le dispositif électronique 130 comprend par exemple la structure de données.

Dans une étape 320 (« SIG1 GENERATION ») suivant l'étape 310, l'étiquette 110 génère la signature SIG1. Par exemple, l'étiquette 110 génère la signature SIG1 uniquement si la transaction correspond à un algorithme cryptographique attendu, par exemple un algorithme de cryptographie sur des courbes elliptiques (ECC, de l'anglais « Elliptic Curve Cryptography »), par exemple secp256k1, secp256r1, Keccak 256, SHA3-256, etc.

Le bloc 118 CRYPT de l'étiquette 110 effectue par exemple une fonction de hachage, par exemple par l'intermédiaire de l'algorithme Keccak-256, pour générer une valeur de hachage (en anglais, « hash ») correspondant à la demande de signature reçue du dispositif électronique 130.

La signature SIG1 est par exemple générée par le bloc 118, à partir de la clé privée C_PR de l'étiquette 110, par exemple par l'intermédiaire d'un algorithme de signature numérique à courbes elliptiques (en anglais, « Elliptic Curve Digital Signature Algorithm », ECDSA).

La signature SIG1 est configurée pour permettre un enregistrement sur une chaîne de blocs. En particulier, la signature SIG1 comprend :
- soit deux composantes r et s générées par un algorithme cryptographique de signature, l'une des composantes identifiant la paire de clés asymétriques C_PU, C_PR. Un exemple d'un tel algorithme est l'algorithme de signature numérique à courbes Edwards (EdDSA, de l'anglais « Edwards-Curve Digital Signature Algorithm »), par exemple Ed25519, l'algorithme prenant en entrée la clé privée et les composantes r et s correspondant par exemple à des coordonnées sur une courbe elliptique. L'algorithme EdDSA est décrit plus en détail dans l'article intitulé « Edwards-Curve Digital Signature Algorithm (EdDSA) » de S. Josefsson et al., le contenu de cet article étant entièrement incorporé dans la présente description ;
- soit trois composantes r, s et v générées par un algorithme cryptographique de signature, par exemple un algorithme ECDSA, où la troisième composante permet l'identification de la clé publique C_PU, la troisième composante correspondant par exemple à un préfixe de signature et/ou un identifiant de récupération (en anglais, « recovery identifier »). La troisième composante v est telle que la clé publique puisse être calculée à partir des composantes r, s et v. La troisième composante v est par exemple également caractéristique de la chaîne de blocs.

La signature SIG1 générée est par exemple conforme aux protocoles de sécurité des chaînes de blocs de types elliptiques et peut être directement utilisée pour signer des transactions sur la chaîne de blocs, sans nécessiter une procédure intermédiaire de conversion de la signature SIG1.

Dans une étape 330 (« SEND SIG1 ») suivant l'étape 320, l'étiquette 110 transmet, en NFC, la signature SIG1 au dispositif électronique 130. Le dispositif électronique 130 ajoute par exemple la signature SIG1 à la structure de données pour signer la transaction T1. La troisième composante v remplace par exemple l'identifiant de la chaîne de blocs et les composantes r et s remplacent les deux zéros.

Dans une étape 340 (« TRANSMIT TRANSACTION ») suivant l'étape 330, le dispositif électronique 130, par exemple par l'intermédiaire de l'application mobile, transmet la transaction T1 signée au serveur 150 pour effectuer l'enregistrement de la liaison sur la chaîne de blocs.

Dans une étape 350 (« SAVE SIG1 ») suivant l'étape 340, des scripts inscrits dans la chaîne de blocs sont par exemple exécutés. Par exemple, ces scripts font partie d'un contrat numérique, tel qu'un contrat intelligent, créé et signé électroniquement par l'entité commercialisant le produit 102. Une vérification est par exemple effectuée par la chaîne de blocs en utilisant une ou plusieurs composantes de la signature SIG1. Par exemple, la composante v est utilisée pour des algorithmes ECDSA ou les composantes r et s sont utilisées pour des algorithmes EdDSA, grâce à la propriété de propriété exclusive (en anglais, « exclusive ownership »). Par exemple, la signature est utilisée pour comparer une adresse de l'étiquette 110 qui est par exemple extraite de la clé publique C_PU, à une adresse attendue, associée au jeton TOKEN, caractérisé par un identifiant. L'adresse de l'étiquette 110 est par exemple obtenue à partir de sa clé publique C_PU. L'adresse correspond par exemple d'un nombre en hexadécimal, généré à partir des 20 derniers octets de la clé publique C_PU ayant subi un hachage cryptographique, par exemple par l'algorithme Keccak-256. L'identifiant du jeton TOKEN est par exemple généré à sa création, par exemple par le système informatique de l'entité commercialisant le produit 102.

Si l'adresse de l'étiquette 110 correspond bien à l'adresse attendue et que la signature SIG1 est conforme, la signature SIG1 est inscrite sur la chaîne de blocs. Ainsi, toute personne ayant accès aux données enregistrées sur la chaîne de blocs et possédant la clé publique C_PU associée à l'étiquette 110 pourra vérifier que le produit 102, muni de l'étiquette 110, corresponde effectivement au jeton TOKEN. Les données inscrites sur la chaîne de blocs ne peuvent être modifiées ou supprimées, ce qui assure que la liaison entre l'étiquette 110 et le jeton TOKEN soit irréversible. Un autre produit que le produit 102, par exemple une contrefaçon, ne peut posséder l'étiquette 110 comprenant l'adresse et la clé privée C_PR. Ainsi, seul le produit 102 peut générer la signature SIG1. Par ailleurs, le jeton TOKEN est par exemple un jeton lié, associé de manière irréversible à l'adresse du destinataire. Le transfert du jeton TOKEN n'est par exemple plus utilisable après cette association.

Dans une étape 360 (« CONFIRMATION »), suivant l'étape 350, une confirmation que l'enregistrement ait été effectuée avec succès est par exemple transmise du serveur 150 au dispositif électronique 130. La confirmation est par exemple accessible depuis l'application mobile. Le jeton TOKEN et son contenu sont par exemple alors également disponibles depuis l'application mobile ce qui procure un moyen de communication privilégié entre l'entité commercialisant le produit 102 et son propriétaire. Dans d'autres modes de réalisation, l'étape 360 est omise.

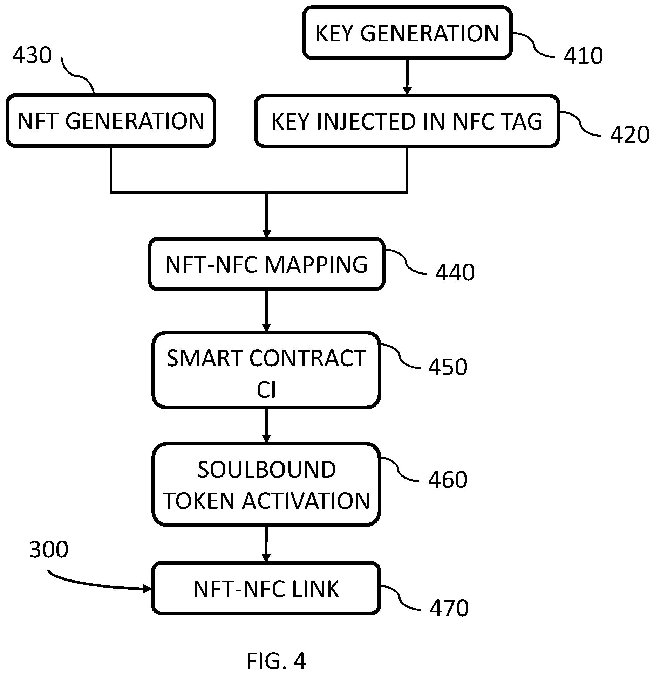

La figure 4 représente des étapes d'un procédé d'enregistrement de la liaison entre l'étiquette 110 de la figure 1 et le jeton TOKEN selon un autre mode de réalisation de la présente description.

Dans une étape 410 (« KEY GENERATION »), la paire de clés C_PR, C_PU est générée, par exemple lors de la fabrication de l'étiquette 110.

Dans une étape 420 (« KEY INJECTED IN NFC TAG ») suivant l'étape 410, la paire de clés C_PR, C_PU générée est enregistrée dans la mémoire 112 de l'étiquette 110, par exemple par le fabricant de l'étiquette 110.

Dans une étape 430 (« NFT GENERATION »), le jeton TOKEN est généré, par exemple par le système informatique de l'entité commercialisant le produit 102. L'identifiant du jeton TOKEN est par exemple généré au moment de la création du jeton TOKEN.

La génération du jeton TOKEN comprend par exemple l'ajout du contenu, par exemple des images et/ou des métadonnées. Par exemple, ce contenu est stocké en association avec l'identifiant du jeton TOKEN sur un serveur décentralisé accessible par le dispositif électronique 130 et/ou le serveur 150, afin que ces dispositifs puissent accéder au contenu.

Dans une étape 440 (« NFT-NFC MAPPING ») suivant les étapes 420 et 430, l'identifiant du jeton TOKEN est attribué à l'adresse de l'étiquette 110, par exemple par le système informatique de l'entité commercialisant le produit 102. Un jeton numérique tel que le jeton TOKEN est par exemple associé à une étiquette telle que l'étiquette 110. Selon un mode de réalisation, plusieurs étiquettes NFC semblables à l'étiquette 110 peuvent chacune être associées à une même collection de jetons numériques. Par exemple, le produit 102 est commercialisé en plusieurs exemplaires. Chaque exemplaire est alors muni d'une étiquette telle que l'étiquette 110 avec une adresse et une paire de clés uniques parmi les exemplaires. Chaque exemplaire est par exemple associé à une même collection de jetons numériques comprenant des informations relatives au produit 102.

La correspondance entre l'identifiant du jeton TOKEN et l'adresse de l'étiquette 110 est par exemple enregistrée sur une base de données du système informatique de l'entité commercialisant le produit 102.

Dans une étape 450 (« SMART CONTRACT ») suivant l'étape 440, un contrat intelligent CI est déployé sur la chaîne de blocs, par exemple par l'intermédiaire d'une transaction signée par le système informatique de l'entité commercialisant le produit 102. La chaîne de blocs est par exemple une chaîne de blocs de type ECC ou Ed25519, par exemple une chaîne de blocs de type machine virtuelle Ethereum (EVM, de l'anglais « Ethereum Virtual Machine ») ou Ethereum. La chaîne de blocs Ethereum est par exemple décrite dans l'article « Ethereum : a secure decentralised generalised transaction ledger, paris version 705168a » de Dr. Gavin Wood ou par la publication « Livre blanc Ethereum » de Vitalik Buterin, publié en 2014 et mis à jour le 8 décembre 2023 (https://ethereum.org/fr/whitepaper/), le contenu de ces publications étant entièrement incorporés dans cette présente description. Le contrat intelligent CI comprend par exemple des scripts exécutables par le serveur 150 pour provoquer l'activation de jetons correspondant à des objets physiques (en anglais, « Physical Backed Tokens-enabled ») par une fonction de type constructeur (en anglais, « constructor ») lors du déploiement du contrat intelligent sur la chaîne de blocs. Le contrat intelligent CI comprend par exemple des correspondances entre des identifiants de jetons et des adresses d'étiquettes NFC dont la correspondance entre l'identifiant du jeton TOKEN et l'adresse de l'étiquette 110. Le contrat intelligent CI comprend par exemple également des scripts exécutables par le serveur 150 pour lier une étiquette à un jeton, des scripts exécutables par le serveur 150 pour enregistrer l'appartenance du produit 102 à un utilisateur, des scripts exécutables par le serveur 150 pour certifier l'authenticité du produit 102 et/ou des scripts exécutables par le serveur 150 pour certifier l'appartenance du produit 102 à un utilisateur, etc.

Dans une étape 460 (« SOULBOUND TOKEN ACTIVATION ») suivant l'étape 450, le jeton TOKEN est activé sur la chaîne de blocs. Une fonction du contrat intelligent CI est exécutée pour que les jetons numériques, dont le jeton TOKEN, soient liés à un compte sur une chaîne de blocs. Suite à l'exécution de cette fonction, le jeton TOKEN ne peut plus être transféré vers un autre compte et/ou une autre adresse destinataire, adresse Ethereum par exemple.

Dans une étape 470 (« NFT-NFC LINK ») suivant l'étape 460, les étapes du procédé 300 de la figure 3 sont réalisées.

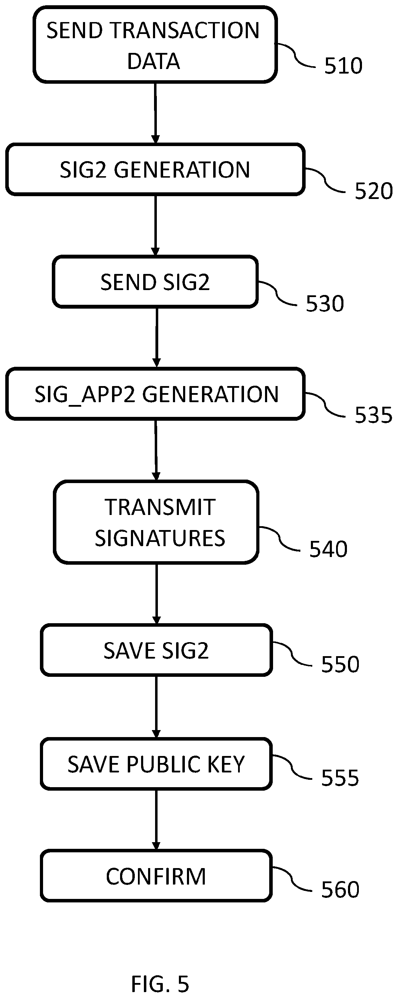

La figure 5 représente des étapes d'un exemple de procédé d'enregistrement d'un propriétaire du produit 102 de la figure 1 selon un mode de réalisation de la présente description.

Dans une étape 510 (« SEND TRANSACTION DATA »), une personne, physique ou morale, en possession du produit 102 et du dispositif électronique 130 de la figure 1 initie une revendication de propriété. Par exemple, la personne, par l'intermédiaire de l'application mobile, exécute une requête d'une transaction T2 sur la chaîne de blocs. Le dispositif électronique 130 envoie à l'étiquette 110, en NFC, une demande de signature, correspondant à la transaction T2 sur la chaîne de blocs. Lors de l'étape 510, le dispositif électronique 130 envoie par exemple des données par NFC à l'étiquette 110, les données faisant par exemple partie de la demande de signature et comprenant par exemple des données caractérisant la transaction T2.

Des étapes 520 (« SIG2 GENERATION ») et 530 (« SEND SIG2 ») similaires aux étapes 320 et 330 de la figure 3 sont effectuées suite à l'étape 510 pour générer une signature SIG2 et l'envoyer au dispositif électronique 130.

Dans une étape 535 (« SIG_APP2 GENERATION ») suivant l'étape 530, le dispositif électronique 130 génère une signature SIG_APP2 pour la transaction T2. La transaction T2 est par exemple signée par les signatures SIG2 et SIG_APP2 afin d'être valide. Une paire de clés comprenant une clé privée PRIV et une clé publique PUB est par exemple générée à l'installation de l'application mobile. Selon un mode de réalisation, la signature SIG_APP2 est générée par le dispositif électronique 130 à partir de la clé privée PRIV et la clé publique PUB permet la vérification de la signature SIG_APP2.

Dans une étape 540 (« TRANSMIT SIGNATURES ») suivant l'étape 530, le dispositif électronique 130, par exemple par l'intermédiaire de l'application mobile, transmet la signature SIG2 au serveur 150 pour effectuer la transaction T2 sur la chaîne de blocs. Selon des modes de réalisation, la transaction T2 comprend deux signatures et le dispositif électronique 130, par exemple par l'intermédiaire de l'application mobile, transmet également la signature SIG_APP2 au serveur 150. L'utilisation des signatures multiples SIG2 et SIG_APP2 augmente la fiabilité de la transaction.

Dans une étape 550 (« SAVE SIG2 ») suivant l'étape 540, des scripts du contrat intelligent CI sont par exemple exécutés par le serveur 150 et la signature SIG2 est inscrite sur la chaîne de blocs. Ainsi, toute personne ayant accès aux données enregistrées sur la chaîne de blocs et possédant la clé publique C_PU associée à l'étiquette 110 pourra vérifier la transaction T2. Le produit 102 comprenant l'étiquette 110 est alors enregistré comme appartenant à l'utilisateur en possession de la clé privée PRIV.

Selon un mode de réalisation, dans une étape 555 (« SAVE PUBLIC KEY ») suivant l'étape 550, les clés publiques C_PU et PUB sont enregistrées sur une base de données du système informatique de l'entité commercialisant le produit 102, par exemple par l'intermédiaire d'un oracle de la chaîne de blocs.

Dans une étape 560 (« CONFIRM »), suivant l'étape 555, une confirmation que la transaction T2 ait été effectuée avec succès est par exemple transmise du serveur 150 au dispositif électronique 130. La confirmation est par exemple accessible depuis l'application mobile.

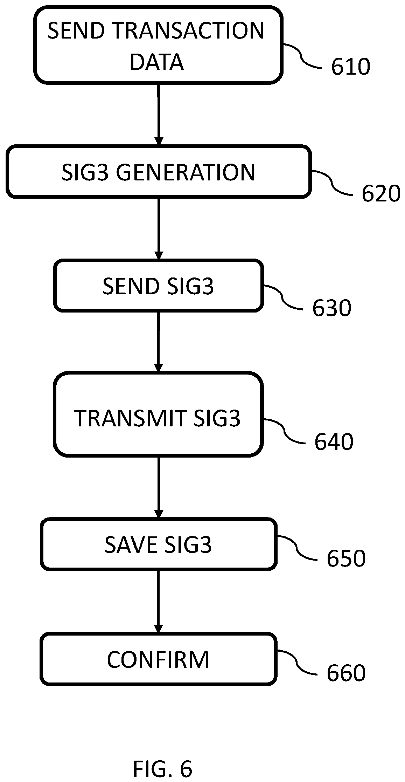

La figure 6 représente des étapes d'un exemple de procédé de vérification d'authenticité du produit 102 de la figure 1 selon un mode de réalisation de la présente description.

Dans une étape 610 (« SEND TRANSACTION DATA »), une personne, physique ou morale, en possession du produit 102 et du dispositif électronique 130 de la figure 1 initialise une vérification d'authenticité du produit 102. Par exemple, la personne, par l'intermédiaire de l'application mobile, exécute une requête d'une transaction T3 sur la chaîne de blocs. Le dispositif électronique 130 envoie à l'étiquette 110, en NFC, une demande de signature, correspondant à la transaction T3 sur la chaîne de blocs.

Lors de l'étape 610, le dispositif électronique 130 envoie par exemple des données par NFC à l'étiquette 110, les données faisant par exemple partie de la demande de signature et comprenant par exemple des données caractérisant la transaction T3.

Des étapes 620 (« SIG3 GENERATION ») et 630 (« SEND SIG3 ») similaires aux étapes 320 et 330 de la figure 3 sont effectuées suite à l'étape 610 pour générer une signature SIG3 et l'envoyer au dispositif électronique 130.

Dans une étape 640 (« TRANSMIT SIG3 ») suivant l'étape 630, le dispositif électronique 130, par exemple par l'intermédiaire de l'application mobile, transmet la signature SIG3 au serveur 150 pour effectuer la transaction T3 sur la chaîne de blocs.

Dans une étape 650 (« SAVE SIG3 ») suivant l'étape 640, des scripts du contrat intelligent CI sont par exemple exécutés par le serveur 150 pour contrôler si l'adresse de l'étiquette 110 ayant initié la transaction correspond à une adresse associée à un jeton numérique, par exemple un jeton NFT et/ou un jeton lié, de l'entité commercialisant le produit 102 et inscrite sur le contrat intelligent, par exemple lors du déploiement du contrat intelligent CI par l'entité commercialisant le produit 102, lors de l'étape 450 de la figure 4.

Dans une étape 660 (« CONFIRM »), suivant l'étape 650, si l'adresse de l'étiquette 110 du produit 102 correspond effectivement à une adresse associée à un jeton numérique, par exemple un jeton NFT et/ou un jeton lié, de l'entité commercialisant le produit 102, alors le produit testé est considéré comme étant authentique, et une confirmation de l'authenticité du produit 102 est par exemple transmise du serveur 150 au dispositif électronique 130. La confirmation est par exemple accessible depuis l'application mobile.

Dans le cas où le produit 102 n'est pas authentique, il ne comprend pas l'étiquette 110. Aucune signature SIG3 ne pourrait être générée ou une signature correspondant à une clé privée différente de la clé C_PR serait générée et la transaction ne serait pas validée.

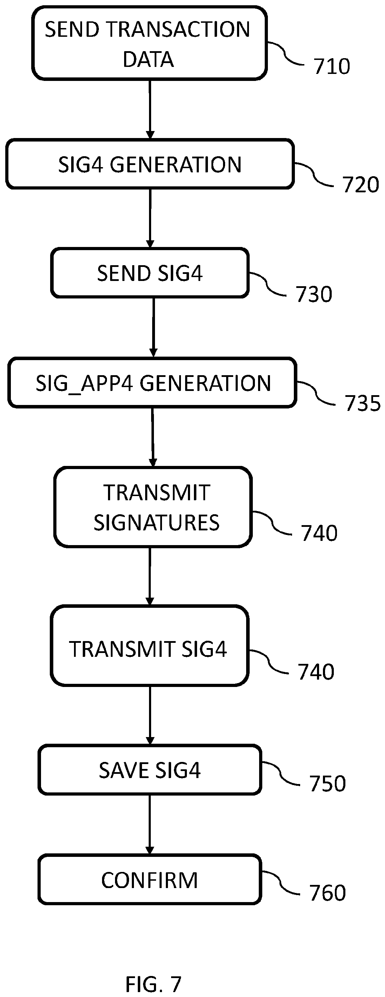

La figure 7 représente des étapes d'un exemple de procédé de vérification d'appartenance du produit 102 de la figure 1 selon un mode de réalisation de la présente description.

Dans une étape 710 (« SEND TRANSACTION DATA »), une personne, physique ou morale, en possession du produit 102 et du dispositif électronique 130 de la figure 1 initie une vérification d'appartenance du produit 102. Par exemple, la personne, par l'intermédiaire de l'application mobile, exécute une requête d'une transaction T4 sur la chaîne de blocs. Le dispositif électronique 130 envoie à l'étiquette 110, en NFC, une demande de signature, correspondant à la transaction T4 sur la chaîne de blocs.

Lors de l'étape 710, le dispositif électronique 130 envoie par exemple des données par NFC à l'étiquette 110, les données faisant par exemple partie de la demande de signature et comprenant par exemple des données caractérisant la transaction T4.

Des étapes 720 (« SIG4 GENERATION ») et 730 (« SEND SIG4 ») similaires aux étapes 320 et 330 de la figure 3 sont effectuées suite à l'étape 710 pour générer une signature SIG4 et l'envoyer au dispositif électronique 130.

Dans une étape 735 (« SIG_APP4 GENERATION ») suivant l'étape 730, le dispositif électronique 130 génère une signature SIG_APP4 pour la transaction T4. La transaction T4 est par exemple signée par les signatures SIG4 et SIG_APP4 pour être valide. Selon un mode de réalisation, la signature SIG_APP4 est générée par le dispositif électronique 130 à partir de la clé privée PRIV.

Dans une étape 740 (« TRANSMIT SIGNATURES ») suivant l'étape 730, le dispositif électronique 130, par exemple par l'intermédiaire de l'application mobile, transmet la signature SIG4 au serveur 150 pour effectuer la transaction T4 sur la chaîne de blocs. Selon des modes de réalisation, la transaction T4 comprend deux signatures et le dispositif électronique 130, par exemple par l'intermédiaire de l'application mobile, transmet également la signature SIG_APP4 au serveur 150.

Dans une étape 750 (« SAVE SIG4 ») suivant l'étape 740, des scripts du contrat intelligent CI sont par exemple exécutés par le serveur 150 pour comparer les clés publiques PUB et C_PU aux clés publiques utilisées lors de l'enregistrement du propriétaire du produit 102 et enregistrées lors de l'étape 555 de la figure 5. Les clés publiques enregistrées sont par exemple lues sur la base de données du système informatique de l'entité commercialisant le produit 102, par exemple par l'intermédiaire d'un oracle de la chaîne de blocs. La comparaison de la clé publique C_PU et de la clé publique PUB assure qu'il s'agisse bien du même produit 102 et d'un utilisateur possédant le même dispositif électronique 130 qui effectue la transaction T4 que lors de la transaction T2 de la figure 5.

Dans une étape 760 (« CONFIRM »), suivant l'étape 750, une confirmation de l'appartenance du produit 102 est par exemple transmise du serveur 150 au dispositif électronique 130 si la paire de clés publiques C_PU, PUB est identique à celle enregistrée la base de données du système informatique de l'entité commercialisant le produit 102 lors de l'étape 555 de la figure 5. La confirmation est par exemple accessible depuis l'application mobile.

Les métadonnées du jeton TOKEN incluent par exemple également des communications de l'entité commercialisant le produit 102 à destination du propriétaire du produit 102 et accessibles depuis l'application mobile. Les modes de réalisation décrits permettent une meilleure information des consommateurs sur la chaîne d'approvisionnement de leurs produits.

Selon un mode de réalisation, le jeton TOKEN est un jeton non fongible correspondant à la norme ERC721, par exemple définit dans le document « ERC-721: Non-Fungible Token Standard » écrit par William Entriken, Dieter Shirley, Jacob Evans et Nastassia Sachs, publié en janvier 2018 (https://eips.ethereum.org/EIPS/eip-721), le contenu de cette publication étant entièrement incorporé dans la présente description.

Selon un mode de réalisation, le jeton TOKEN comprend une ou plusieurs images du produit 102, par exemple un jumeau numérique d produit 102.

Selon un mode de réalisation, le jeton TOKEN est un jeton lié. Le jeton TOKEN ne peut alors en aucun cas être transféré ou dissocié de l'étiquette 110 suite à un enregistrement d'une liaison entre l'étiquette 110 et le jeton TOKEN, tel que détaillé en relation avec la figure 3. L'étiquette 110 est l'unique propriétaire de ce jeton TOKEN. L'information de propriété est par exemple disponible sur la chaîne de blocs et rien n'est stocké dans une mémoire interne de l'étiquette 110.

De façon avantageuse, les modes de réalisation décrits utilisent une communication NFC entre le produit 102 et le dispositif électronique 130. Ce mode de communication sur de courtes distances est sécurisé et passif du côté du produit 102 qui ne nécessite pas de circuits électroniques ou de batterie. La solution présentée est peu onéreuse et compatible avec une large variété de produits. Enfin, les modes de réalisation décrits permettent la génération, par le produit 102, d'une signature à trois composantes directement compatible avec la chaîne de blocs.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

## Revendications

1. Procédé d'enregistrement d'une liaison entre une étiquette radiofréquences (110) et un jeton (TOKEN) comprenant des données associées à un produit (102), le procédé comprenant :
- l'envoi, par communication en champ proche (NFC, de anglais « Near Field Communication ») ou en radio-identification (RFID, de l'anglais « radio frequency identification »), de données d'une transaction par un dispositif électronique (130) à l'étiquette ;
- la génération d'une signature des données de la transaction par l'étiquette sur la base d'une clé privée (C_PR) d'une paire de clés asymétriques comprenant en outre une clé publique (C_PU), la signature étant configurée pour permettre un enregistrement sur une chaîne de blocs ;
- la transmission par l'étiquette de la transaction signée vers le dispositif électronique en NFC ou RFID ; et
- l'enregistrement, de manière immuable, de la liaison entre l'étiquette et le jeton par la transmission, par le dispositif électronique, de la transaction signée à un serveur (150) réalisant la chaîne de blocs.

2. Procédé selon la revendication 1, dans lequel la signature comprend trois composantes (v, r, s) générées par un algorithme de signature cryptographique, dont la troisième composante (v) permet l'identification de la clé publique.

3. Procédé selon la revendication 1, dans lequel la signature comprend deux composantes (r, s) générées par un algorithme de signature cryptographique, l'une des composantes identifiant la paire de clés asymétriques.

4. Procédé selon l'une quelconque des revendications 1 à 3, dans lequel l'enregistrement de la liaison entre l'étiquette et le jeton comprend l'exécution par le serveur de scripts.

5. Procédé selon l'une quelconque des revendications 1 à 4, dans lequel l'envoi des données de transaction par le dispositif électronique (130) s'effectue par l'intermédiaire d'une application, l'application étant mise en œuvre par le dispositif électronique et l'enregistrement de la liaison étant initié par l'application.

6. Procédé selon l'une quelconque des revendications 1 à 5, dans lequel la génération de la signature est effectuée par un algorithme de cryptographie elliptique.

7. Procédé selon l'une quelconque des revendications 1 à 6, dans lequel la chaîne de blocs est de type machine virtuelle Ethereum.

8. Système d'enregistrement d'une liaison entre une étiquette radiofréquences (110) et un jeton (TOKEN) comprenant des données associées à un produit (102), le dispositif comprenant :
- un dispositif électronique (130) configuré pour envoyer, en NFC ou en RFID, des données d'une transaction à l'étiquette (110), et configuré pour transmettre la transaction signée à un serveur (150) réalisant une chaîne de blocs (en anglais, « blockchain ») ;
- l'étiquette (110) configurée pour générer une signature des données de la transaction sur la base d'une clé privée (C_PR), formant une paire de clés asymétriques comprenant en outre une clé publique (C_PU), la signature étant configurée pour permettre un enregistrement sur une chaîne de blocs, l'étiquette (110) étant en outre configurée pour transmettre, en NFC ou en RFID, la signature vers le dispositif électronique (130), le dispositif électronique étant configuré pour transmettre la transaction signée vers le serveur réalisant la chaîne de blocs et configuré pour enregistrer, de manière immuable, la liaison entre l'étiquette (110) et le jeton (TOKEN).

9. Système selon la revendication 8, dans lequel la signature comprend trois composantes (v, r, s) générées par un algorithme de signature cryptographique, dont la troisième composante (v) permet l'identification de la clé publique.

10. Système selon la revendication 8, dans lequel la signature comprend deux composantes (r, s) générées par un algorithme de signature cryptographique, l'une des composantes identifiant la paire de clés asymétriques.

11. Système selon l'une quelconque des revendications 8 à 10, comprenant en outre le serveur (150).

12. Système selon l'une quelconque des revendications 8 à 11, dans lequel l'étiquette (110) est attachée ou intégrée au produit (102).

13. Système selon l'une quelconque des revendications 8 à 12, dans lequel les données associées au produit sont des images et/ou des métadonnées.

## Revendications modifiées

### Revendications modifiées conformément à la règle 137(2) CBE.

1. Procédé d'enregistrement d'une liaison entre une étiquette radiofréquences (110) et un jeton (TOKEN) comprenant des données associées à un produit (102), le procédé comprenant :
- l'envoi, par communication en champ proche ou en radio-identification, de données d'une transaction par un dispositif électronique (130) à l'étiquette ;
- la génération d'une signature des données de la transaction par l'étiquette sur la base d'une clé privée (C_PR) d'une paire de clés asymétriques comprenant en outre une clé publique (C_PU), la signature étant configurée pour permettre un enregistrement sur une chaîne de blocs ;
- la transmission par l'étiquette de la transaction signée vers le dispositif électronique en communication en champ proche ou en radio-identification ; et
- l'enregistrement, de manière immuable, de la liaison entre l'étiquette et le jeton par la transmission, par le dispositif électronique, de la transaction signée à un serveur (150) réalisant la chaîne de blocs,
la signature comprenant trois composantes (v, r, **s)** générées par un algorithme de signature cryptographique, dont la troisième composante (v) permet l'identification de la clé publique.

2. Procédé selon la revendication 1, dans lequel l'enregistrement de la liaison entre l'étiquette et le jeton comprend l'exécution par le serveur de scripts.

3. Procédé selon l'une quelconque des revendications 1 à 2, dans lequel l'envoi des données de transaction par le dispositif électronique (130) s'effectue par l'intermédiaire d'une application, l'application étant mise en œuvre par le dispositif électronique et l'enregistrement de la liaison étant initié par l'application.

4. Procédé selon l'une quelconque des revendications 1 à 3, dans lequel la génération de la signature est effectuée par un algorithme de cryptographie elliptique.

5. Procédé selon l'une quelconque des revendications 1 à 4, dans lequel la chaîne de blocs est de type machine virtuelle Ethereum.

6. Système d'enregistrement d'une liaison entre une étiquette radiofréquences (110) et un jeton (TOKEN) comprenant des données associées à un produit (102), le dispositif comprenant :
- un dispositif électronique (130) configuré pour envoyer, en communication en champ proche ou en radio-identification, des données d'une transaction à l'étiquette (110), et configuré pour transmettre la transaction signée à un serveur (150) réalisant une chaîne de blocs (en anglais, « blockchain ») ;
- l'étiquette (110) configurée pour générer une signature des données de la transaction sur la base d'une clé privée (C_PR), formant une paire de clés asymétriques comprenant en outre une clé publique (C_PU), la signature étant configurée pour permettre un enregistrement sur une chaîne de blocs, l'étiquette (110) étant en outre configurée pour transmettre, en communication en champ proche ou en radio-identification, la signature vers le dispositif électronique (130), le dispositif électronique étant configuré pour transmettre la transaction signée vers le serveur réalisant la chaîne de blocs et configuré pour enregistrer, de manière immuable, la liaison entre l'étiquette (110) et le jeton (TOKEN),
la signature comprenant trois composantes (v, r, s) générées par un algorithme de signature cryptographique, dont la troisième composante (v) permet l'identification de la clé publique.

7. Système selon la revendication 6, comprenant en outre le serveur (150).

8. Système selon l'une quelconque des revendications 6 à 7, dans lequel l'étiquette (110) est attachée ou intégrée au produit (102).

9. Système selon l'une quelconque des revendications 6 à 8, dans lequel les données associées au produit sont des images et/ou des métadonnées.
